(19) Europäisches Patentamt
European Patent Office
Office européen des brevets

(11) **EP 3 783 882 B1**

(12) **EUROPEAN PATENT SPECIFICATION**

(45) Date of publication and mention
of the grant of the patent:
**04.10.2023 Bulletin 2023/40**

(21) Application number: **19875951.6**

(22) Date of filing: **06.06.2019**

(51) International Patent Classification (IPC):
*H04N 23/60* (2023.01)       *H04N 23/71* (2023.01)
*H04N 23/73* (2023.01)       *H04N 23/75* (2023.01)
*H04N 23/76* (2023.01)       *G07C 5/08* (2006.01)
*G06N 3/084* (2023.01)       *G06V 10/60* (2022.01)
*G06V 20/56* (2022.01)

(52) Cooperative Patent Classification (CPC):
**G06N 3/084; G06V 10/60; G06V 20/56;
H04N 23/64; H04N 23/71; H04N 23/73;
H04N 23/75; H04N 23/76**

(86) International application number:
**PCT/CN2019/090372**

(87) International publication number:
**WO 2020/082745 (30.04.2020 Gazette 2020/18)**

(54) **CAMERA APPARATUS ADJUSTMENT METHOD AND RELATED DEVICE**

VERFAHREN ZUR EINSTELLUNG EINER KAMERAVORRICHTUNG UND ZUGEHÖRIGE VORRICHTUNG

PROCÉDÉ DE RÉGLAGE D'APPAREIL PHOTO ET DISPOSITIF ASSOCIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.10.2018  CN 201811260175**

(43) Date of publication of application:
**24.02.2021  Bulletin 2021/08**

(73) Proprietor: **HUAWEI TECHNOLOGIES CO., LTD.
Shenzhen, Guangdong 518129 (CN)**

(72) Inventors:
• **YANG, Dongdong
  Shenzhen, Guangdong 518129 (CN)**
• **HU, Weilong
  Shenzhen, Guangdong 518129 (CN)**

• **YANG, Tao
  Shenzhen, Guangdong 518129 (CN)**

(74) Representative: **Isarpatent
Patent- und Rechtsanwälte Barth
Charles Hassa Peckmann & Partner mbB
Friedrichstrasse 31
80801 München (DE)**

(56) References cited:
**EP-A1- 3 291 134        CN-A- 104 320 642
CN-A- 107 797 549        CN-A- 108 449 550
CN-A- 108 513 059        CN-A- 109 167 929
CN-A- 109 246 364        JP-A- 2006 303 885
KR-B1- 101 735 068       US-A1- 2017 153 326
US-A1- 2018 262 678**

**Description**

**TECHNICAL FIELD**

The present disclosure relates to the field of self-driving technologies, and the invention in particular relates to a method for adjusting a camera apparatus and a related apparatus.

**BACKGROUND**

With development of artificial intelligence technologies, autonomous vehicles (autonomous vehicles) have become a research focus. In the self-driving field, a camera apparatus including a camera is used as one of main sensors of an autonomous vehicle and plays a role of an "eye".

However, in an actual use process, it is found that: During driving of an automobile, due to a complex lighting condition, especially when the automobile enters or exits a tunnel, light brightness changes greatly. If a camera apparatus uses a same exposure parameter to capture a road environment image, and then the road environment image is analyzed for safe driving, it is prone to obtain an image blurred with low picture quality when the same exposure parameter is used for photographing in different lighting conditions. This affects safety of automobile driving.

EP 3 291 134 A1 teaches the obtaining of tunnel data provided by a map or even by images captured by a vision sensor. It also discloses that the vehicle is installed with a camera apparatus used for image capture. A control apparatus adjusts a level of illumination variation of the vision sensor. It is also described that a camera controller transmits a parameter control signal to a camera based on a determination whether the host vehicle is located within a threshold distance from the point at which an illumination variation is expected. This could be an entry point of a tunnel.

US 2017/153 326 A1 discloses the transmission of a location-dependent sensor operation parameter of a communication link to a vehicle mounted sensor from an external server system. The sensor can be a vehicle mounted camera and the at least one operating parameter comprises an exposure parameter for controlling the camera exposure operation. An imminent entry of the vehicle in a tunnel can be detected and the location-dependent operating parameter indicates an exposure setting of the camera in the tunnel.

US 2018/262678 A1 discloses an adjustment of exposure settings of a vehicle mounted camera using a trained model implemented in a control model. The control module compares the captured image to a plurality of previously captured training images. The control module also determines which one of the plurality of training images is most similar to the captured image. The control module then modifies settings of the camera to match camera settings used to capture the one or more of the plurality of training images that is most similar to the captured image. The model is trained with training images containing tunnel-entry and tunnel-exit scenes.

**SUMMARY**

The object of the present invention is to provide a method, an apparatus, and a computing device to adjust an exposure parameter of a camera apparatus timely and accurately, thereby effectively ensuring safety of vehicle driving. This object is solved by the attached independent claims and further advantageous embodiments and improvements of the invention are listed in the dependent claims. Hereinafter, "...aspect according to the invention" or "according to the invention" relates to the broadest embodiment as claimed in the independent claims and "according to an embodiment", "optionally", "implementation", "design", "scenario" or similar relate to embodiments and further improvements of the invention. "according to the present disclosure" or "the disclosure further provides" or similar relate to further details contributing to the understanding of the invention as claimed.

By implementing the embodiments of the present invention, the exposure parameter of the camera apparatus can be adjusted in an effective and accurate manner, thereby ensuring safety of vehicle driving.

**BRIEF DESCRIPTION OF DRAWINGS**

To describe the technical solutions in the embodiments of the present invention or in the prior art more clearly, the following briefly describes the accompanying drawings for describing the embodiments or the prior art.

FIG. 1 is a schematic diagram of a functional framework of a vehicle according to an embodiment of the present invention;
FIG. 2 is a schematic framework diagram of a system according to an embodiment of the present invention;
FIG. 3A and FIG. 3B are two schematic scenario diagrams according to an embodiment of the present invention;
FIG. 4 is a schematic flowchart of a parameter adjustment method according to an embodiment of the present invention;

FIG. 5 is a schematic structural diagram of a parameter adjustment apparatus according to an embodiment of the present invention; and

FIG. 6 is a schematic structural diagram of a computing device according to an embodiment of the present invention.

## DESCRIPTION OF EMBODIMENTS

The following describes the technical solutions in the embodiments of the present invention in detail with reference to the accompanying drawings in the present invention.

There is a problem in the prior art as follows: If a camera apparatus uses a same exposure parameter for photographing in different lighting conditions, an obtained image is blurred with low picture quality. This affects safety of vehicle driving. To resolve the problem, the embodiments of the present invention specially propose a parameter adjustment method, and schematic scenario diagrams, a schematic framework diagram, and a schematic structural diagram of a related device to which the method is applicable.

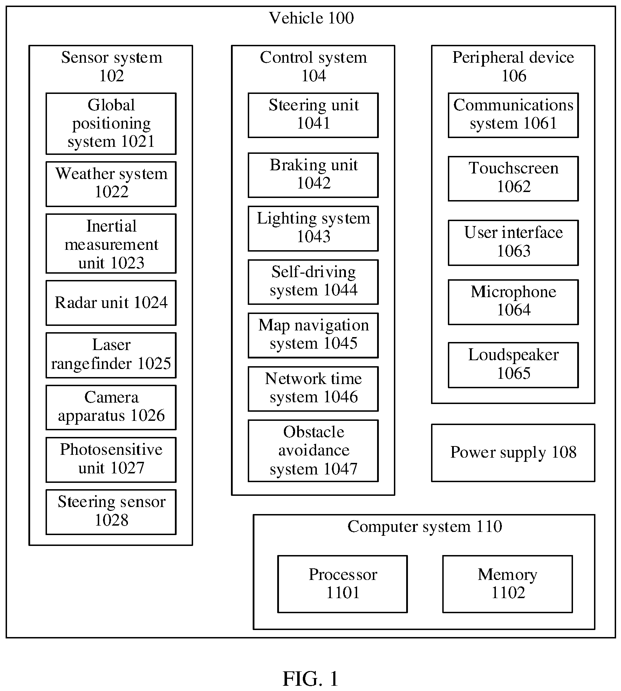

First, FIG. 1 is a possible schematic diagram of a functional framework of a vehicle. As shown in FIG. 1, the functional framework of the vehicle 100 may include various subsystems, for example, a sensor system 102, a control system 104, one or more peripheral devices 106 (one peripheral device 106 is shown as an example in the figure), a power supply 108, and a computer system 110 that are in the figure. Optionally, the vehicle 100 may further include another functional system, for example, an engine system that provides power for the vehicle 100. This is not limited in the present invention.

The sensor system 102 may include several detection apparatuses. These detection apparatuses can sense measured information, and convert, according to a specific law, the sensed information into an electrical signal or other information in a required form for output. As shown in the figure, these detection apparatuses may include a global positioning system (global positioning system, GPS) 1021, a weather system 1022, an inertial measurement unit (inertial measurement unit, IMU) 1023, a radar unit 1024, a laser rangefinder 1025, a camera apparatus 1026, a photosensitive unit 1027, a steering sensor 1028, other elements used for automatic detection, and the like. This is not limited in the present invention.

The global positioning system GPS 1021 is a system that implements positioning and navigation worldwide in real time by using a GPS positioning satellite. In the present invention, the global positioning system GPS may be configured to position a vehicle in real time, and provide geographic location information of the vehicle. The weather system 1022 is configured to provide weather data. The weather data includes but is not limited to temperature data, atmospheric pressure data, rainfall, snowfall, and whether weather is clear. The inertial measurement unit 1023 may include a combination of an accelerometer and a gyroscope, and is an apparatus that measures an angular velocity and an acceleration of the vehicle 100. For example, during driving of the vehicle, the inertial measurement unit may measure a location, an angular variation, and the like of a vehicle body based on an inertial acceleration of the vehicle.

The radar unit 1024 may also be referred to as a radar system. The radar unit senses an object by using a radio signal in a current environment of vehicle driving. Optionally, the radar unit may further sense information such as a running speed and a direction of travel of the object. In actual application, the radar unit may be configured as one or more antennas for receiving or sending a radio signal. The laser rangefinder 1025 may be an instrument that implements distance measurement of a target object by using a modulated laser. In other words, the laser rangefinder may be configured to implement distance measurement of the target object. In actual application, the laser rangefinder may include but is not limited to any one or a combination of a plurality of the following elements: a laser source, a laser scanner, and a laser detector.

The camera apparatus 1026 is configured to photograph imagery such as an image and a video. In the present invention, during driving of the vehicle or after starting of the camera apparatus, the camera apparatus may capture an image of an environment of the vehicle in real time. For example, in a process in which the vehicle enters or exits a tunnel, the camera apparatus may capture corresponding images consecutively in real time. In actual application, the camera apparatus includes but is not limited to an event data recorder, a camera, a video camera, and other elements used for photographing/image shooting. A quantity of camera apparatuses is not limited in the present invention.

The photosensitive unit 1027 may include several light sensors, configured to detect brightness of an environment of the vehicle that may also be referred to as environmental brightness. The steering sensor 1028 may represent a system used for detecting a steering angle of the vehicle. In actual application, the steering sensor 1028 may be configured to measure a steering angle of a steering wheel of the vehicle, or may be configured to measure an electrical signal indicative of the steering angle of the steering wheel of the vehicle. Optionally, the steering sensor 1028 may also be configured to measure a steering angle of a tire of the vehicle, or may be configured to measure an electrical signal indicative of the steering angle of the tire of the vehicle and the like. This is not limited in the present invention.

In other words, the steering sensor 1028 may be configured to measure any one or a combination of a plurality of the following: the steering angle of the steering wheel, the electrical signal indicative of the steering angle of the steering wheel, the steering angle of the wheel (the tire of the vehicle), the electrical signal indicative of the steering angle of the wheel, and the like.

The control system 104 may include several elements, for example, a steering unit 1041, a braking unit 1042, a lighting system 1043, a self-driving system 1044, a map navigation system 1045, a network time system 1046, and an obstacle avoidance system 1047 that are in the figure. Optionally, the control system 104 may further include elements such as an engine throttle controller used for controlling a driving speed of the vehicle. This is not limited in the present invention.

The steering unit 1041 may represent a system used for adjusting a driving direction of the vehicle 100, and may include but is not limited to a steering wheel, and any other structural component used for adjusting or controlling the driving direction of the vehicle. The braking unit 1042 may represent a system used for reducing the driving speed of the vehicle 100. In actual application, the braking unit 1042 may make use of friction to make the tire of the vehicle move slower, to further reduce the driving speed of the vehicle. The lighting system 1043 is configured to provide a lighting function or a warning function for the vehicle. For example, during driving of the vehicle at night, the lighting system 1043 may start headlamps and rear lamps of the vehicle, to provide light brightness for vehicle driving, thereby ensuring safe driving of the vehicle. In actual application, the lighting system includes but is not limited to headlamps, rear lamps, a width lamp, and a warning lamp.

The self-driving system 1044 may include a hardware system and a software system, and is configured to process and analyze data input to the self-driving system 104, to obtain an exposure parameter of the camera apparatus, so that the camera apparatus can obtain a clear image with high picture quality when performing photographing by using the exposure parameter. Optionally, the self-driving system 104 may further determine information such as an obstacle to the vehicle and characteristics of an environment of the vehicle (for example, a lane for current vehicle driving, a road boundary, and a traffic light to be passed through) by analyzing the data. The data input to the self-driving system 104 may be image data collected by the camera apparatus, or may be data collected by the elements in the sensor system 102, for example, the weather data provided by the weather system and the environmental brightness provided by the photosensitive unit. This is not limited in the present invention.

The map navigation system 1045 is configured to provide map information and a navigation service for the vehicle 100. In actual application, the map navigation system 1045 may plan an optimal driving route, for example, a route with a shortest path or a less traffic flow, based on positioning information of the vehicle (which may specifically be a current location of the vehicle) provided by the GPS and a destination address entered by a user. This facilitates vehicle driving with the aid of navigation based on the optimal driving route, to reach the destination address. Optionally, in addition to providing the navigation function, the map navigation system may further provide or present corresponding map information to the user depending on an actual user requirement, for example, present a road section for current vehicle driving on a map in real time. This is not limited in the present invention.

The network time system (network time system, NTS) 1046 is configured to provide a time service, to ensure that current system time of the vehicle is synchronous with network standard time. This is conducive to providing more precise time information for the vehicle. In specific implementation, the network time system 1046 may obtain a standard time signal from the GPS satellite, and synchronously update the current system time of the vehicle by using the time signal, to ensure that the current system time of the vehicle is consistent with time corresponding to the obtained standard time signal.

The obstacle avoidance system 1047 is configured to predict an obstacle that possibly appears during driving of the vehicle, and control the vehicle 100 to bypass or leap the obstacle to implement normal driving of the vehicle 100. For example, the obstacle avoidance system 1047 may use sensor data collected by the elements in the sensor system 102, to determine, through analysis, an obstacle that possibly appears on a driving road of the vehicle. If the obstacle is relatively large in size, for example, is a fixed construction (storied house) on a roadside, the obstacle avoidance system 1047 may control the vehicle 100 to bypass the obstacle to implement safe driving. In contrast, if the obstacle is relatively small in size, for example, is a small stone on a roadside, the obstacle avoidance system 1047 may control the vehicle 100 to leap the obstacle, continue driving forward, and the like.

The peripheral device 106 may include several elements, for example, a communications system 1061, a touchscreen 1062, a user interface 1063, a microphone 1064, and a loudspeaker 1065 that are in the figure. The communications system 1061 is configured to implement network communication between the vehicle 100 and a device other than the vehicle 100. In actual application, the communications system 1061 may use a wireless communications technology or a wired communications technology to implement network communication between the vehicle 100 and the another device. The wired communications technology may mean using a network cable, an optical fiber, or the like to perform communication between the vehicle and the another device. The wireless communications technology includes but is not limited to global system for mobile communications (global system for mobile communications, GSM), general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), a wireless local area network (wireless local area networks, WLAN) (such as a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), and an infrared (infrared, IR) technology.

The touchscreen 1062 may be configured to detect an operating instruction on the touchscreen 1062. For example, the user performs, depending on an actual requirement, a touch operation on content data presented on the touchscreen 1062, to implement a function corresponding to the touch operation, for example, playing a multimedia file such as music or a video. The user interface 1063 may specifically be a touch panel configured to detect an operating instruction on the touch panel. The user interface 1063 may alternatively be a physical key or a mouse. The user interface 1064 may alternatively be a screen configured to output data and display an image or data. Optionally, the user interface 1064 may alternatively be at least one device, such as a touchscreen, a microphone, or a loudspeaker, that belongs to a peripheral device.

The microphone 1064, also be referred to as "mic" or "mike", is configured to convert a sound signal into an electrical signal. When making a call or sending voice information, the user moves close to the microphone to make a sound. In this way, the sound signal can be input to the microphone. The loudspeaker 1065, also referred to as a speaker, is configured to convert an audio electrical signal into a sound signal. For example, music may be played or a hands-free call may be answered in the vehicle through the loudspeaker 1065.

The power supply 108 represents a system used for providing power or energy for the vehicle, and may include but is not limited to a rechargeable lithium battery and lead-acid battery. In actual application, one or more battery modules in the power supply are configured to provide electrical energy or energy for starting the vehicle. A type and a material of the power supply are not limited in the present invention. Optionally, the power supply 108 may be an energy source, and is configured to provide energy for the vehicle, for example, petrol, diesel fuel, ethanol, a solar cell, or a solar panel. This is not limited in the present invention.

Several functions of the vehicle 100 are all implemented through control by the computer system 110. The computer system 110 may include one or more processors 1101 (one processor is shown as an example in the figure) and a memory 1102 (which may also be referred to as a storage apparatus). In actual application, the memory 1102 is inside the computer system 110, or may be outside the computer system 110, for example, may be used as a cache in the vehicle 100. This is not limited in the present invention.

The processor 1101 may include one or more general purpose processors, for example, a graphics processing unit (graphic processing unit, GPU). The processor 1101 may be configured to run a related program stored in the memory 1102 or an instruction that is corresponding to a program and that is stored in the memory 1102, to implement a corresponding function of the vehicle.

The memory 1102 may include a volatile memory (volatile memory), such as a RAM; or the memory may include a non-volatile memory (non-volatile memory), such as a ROM, a flash memory (flash memory), an HDD, or a solid-state drive SSD; or the memory 1102 may include a combination of the memories of the foregoing types. The memory 1102 may be configured to store a set of program code or an instruction corresponding to program code, so that the processor 1101 invokes the program code or the instruction stored in the memory 1102, to implement a corresponding function of the vehicle. The function includes but is not limited to some or all functions in the schematic diagram of the functional framework of the vehicle shown in FIG. 1. In the present invention, the memory 1102 may store a set of program code used for parameter adjustment. The processor 1101 may invoke the program code to adjust the exposure parameter of the camera apparatus (for example, the camera apparatus) in the vehicle. A specific manner of implementing parameter adjustment for the camera apparatus is detailed below in the present invention.

Optionally, in addition to storing the program code or the instruction, the memory 1102 may further store information such as a road map, a driving route, and sensor data. The computer system 110 may implement a vehicle-related function in combination with other elements in the schematic diagram of the functional framework of the vehicle, such as the sensor and the GPS in the sensor system. For example, the computer system 110 may control the driving direction or the driving speed of the vehicle 100 based on the data input of the sensor system 102. This is not limited in the present invention.

It should be noted that FIG. 1 is merely a possible schematic diagram of the functional framework of the vehicle 100. In actual application, the vehicle 100 may include more or fewer systems or elements. This is not limited in the present invention which is defined in the appended claims.

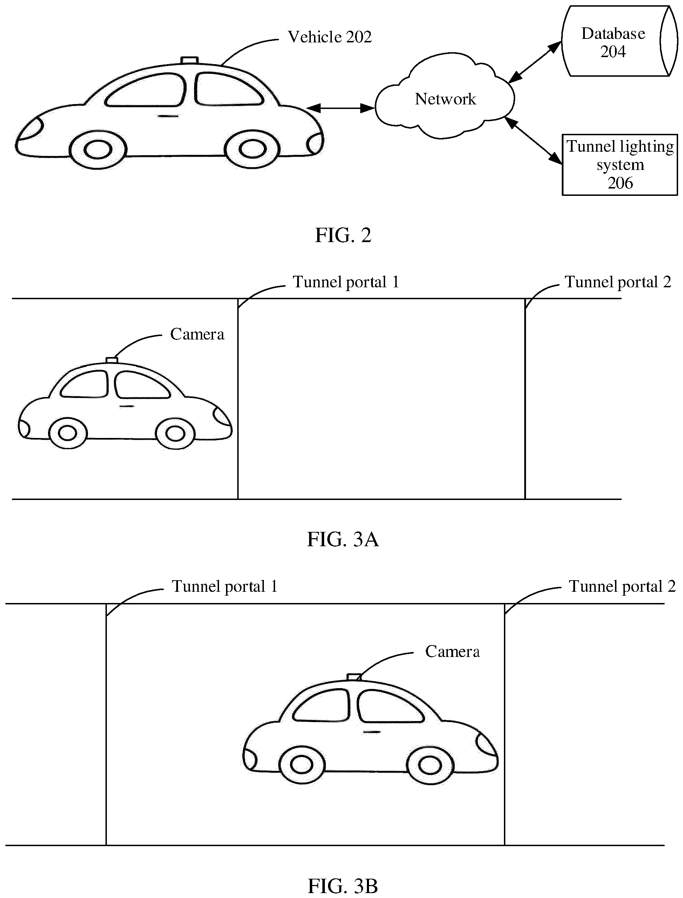

The following describes a possible system architecture to which the present invention is applicable. FIG. 2 is a possible schematic framework diagram of a system according to an embodiment of the present invention. The system 200 includes a vehicle 202. Optionally, the system 200 may further include a database 204 and a tunnel lighting system 206.

The vehicle 202 may specifically be the vehicle 100 shown in FIG. 1. In actual application, the vehicle 202 may include elements such as a weather system, a map navigation system, a network time system, a self-driving system, and a camera apparatus. For details, refer to related descriptions in the embodiment shown in FIG. 1. Details are not described herein again. Deployment manners and deployment locations of the elements in the vehicle 202 are not limited in the present invention. That the camera apparatus is a camera is used as an example. The camera may be installed inside or outside the vehicle 202. For example, the camera in the figure is installed outside a sunroof. Optionally, an installation angle of the camera may be self-defined depending on an actual user requirement or a user's preference. This is not limited in the present invention which is defined in the appended claims.

The vehicle 202 may include but is not limited to a truck, a freight car, a train, a sedan car, a motorcycle, an off-road vehicle, a farm vehicle, and other means of transportation or transportation equipment.

The database 204 may be deployed in the vehicle 202 locally, or may be deployed in another device (for example, a server or a cloud-side server). The database 204 is configured to store data. For example, in an application scenario in which an exposure parameter of the camera apparatus needs to be readjusted when the vehicle enters or exits a tunnel, the database may be configured to store exposure parameters of the camera apparatus that are present before and after the vehicle enters or exits the tunnel, may store tunnel environment data that is present before and after the vehicle enters or exits the tunnel, or may store a correspondence/an association relationship between tunnel environment data and exposure parameters of the camera apparatus that are present before and after the vehicle enters or exits the tunnel. This is not limited in the present invention which is defined in the appended claims.

The tunnel environment data is tunnel-related environment data when the vehicle enters or exits the tunnel, and may include tunnel internal environment data and tunnel external environment data. The tunnel internal environment data may include but is not limited to light brightness inside the tunnel, a ventilation quantity inside the tunnel, and temperature and atmospheric pressure inside the tunnel. The tunnel external environment data may include but is not limited to light brightness outside the tunnel (which may also be referred to as environmental brightness), and temperature, atmospheric pressure, and rainfall outside the tunnel.

For example, if the database stores an exposure parameter, of the camera apparatus in the vehicle, that is present when the vehicle enters or exits a tunnel, when the vehicle enters or exits the tunnel again during driving, the exposure parameter of the camera apparatus can be directly obtained from the database, and the exposure parameter is set to a current exposure parameter of the camera apparatus. This is convenient for the camera apparatus to capture a clear image with high picture quality by using the exposure parameter, and is conducive to safe driving of the vehicle.

The tunnel lighting system 206 is deployed in the tunnel, and is configured to adjust light luminance inside the tunnel, to avoid a traffic accident caused due to excessively dim light inside the tunnel, and avoid reduction in safety of vehicle driving. It can be understood that light brightness before and after the vehicle enters or exits the tunnel changes obviously. To avoid a traffic accident caused due to excessively dim light inside the tunnel, the tunnel lighting system may provide corresponding light brightness for the tunnel, so that the vehicle does not suffer from a traffic accident caused due to excessively low light brightness during driving inside the tunnel.

In actual application, the tunnel lighting system 206 may specifically include a photosensitive module and a vehicle to everything (vehicle to everything, V2X) module. The photosensitive module is configured to provide corresponding light brightness. The V2X module is configured to exchange information between the vehicle and the V2X module. For example, the V2X module may send a broadcast message to the vehicle inside the tunnel in real time or periodically, where the broadcast message may be used to notify information such as the light brightness inside the tunnel and traffic density inside the tunnel. Optionally, after the vehicle enters the tunnel, the vehicle may proactively send a notification message to the V2X module, where the notification message is used to indicate information such as an identifier of the vehicle or a driving speed of the vehicle. This is not limited in the present invention. Optionally, the tunnel lighting system 206 may send tunnel-related information to a network side, for example, send the tunnel-related information to a network server by using the V2X module. Correspondingly, the vehicle may obtain the tunnel-related information from the network server, where the information includes but is not limited to information such as the light brightness, the temperature, and the traffic density inside the tunnel, and a length of the tunnel. This is convenient for the vehicle to subsequently process the obtained tunnel-related information and the like. This is not limited in the present invention which is defined in the appended claims.

Then, schematic scenario diagrams to which the present invention is applicable are described. FIG. 3A and FIG. 3B are two possible schematic scenario diagrams. FIG. 3A is a schematic scenario diagram illustrating that a vehicle enters a tunnel, and FIG. 3B is a schematic scenario diagram illustrating that a vehicle exits a tunnel.

Specifically, as shown in FIG. 3A and FIG. 3B, when the vehicle enters the tunnel and exits the tunnel, light brightness changes obviously. As shown in FIG. 3A, after the vehicle enters the tunnel, light brightness becomes lower obviously compared with light brightness outside the tunnel. As shown in FIG. 3B, after the vehicle exits the tunnel, light brightness becomes higher obviously compared with light brightness inside the tunnel. When the vehicle enters or exits the tunnel, if the camera apparatus uses a same prior-art exposure parameter for photographing, obviously, images photographed before and after the vehicle enters or exits the tunnel are blurred with low picture quality. For example, before the vehicle enters the tunnel, the camera apparatus can use an exposure parameter 1 to photograph an image with high picture quality. After the vehicle enters the tunnel, if the camera apparatus still uses the exposure parameter 1 for photographing, it is prone to obtain a low-definition image. For the autonomous vehicle, the vehicle needs to control vehicle driving based on the image captured by the camera apparatus. Because of the image with low picture quality, a safety accident is easily caused, reducing safety of vehicle driving.

To resolve the foregoing problem, the present invention proposes a solution for readjusting, based on tunnel environment data, an exposure parameter of a camera apparatus that is present when a vehicle enters or exits a tunnel, so that the camera apparatus can capture a clear image with high picture quality, thereby ensuring safe driving of an autonomous vehicle. A specific manner of adjusting the exposure parameter of the camera apparatus based on the tunnel environment data is detailed below in the present invention.

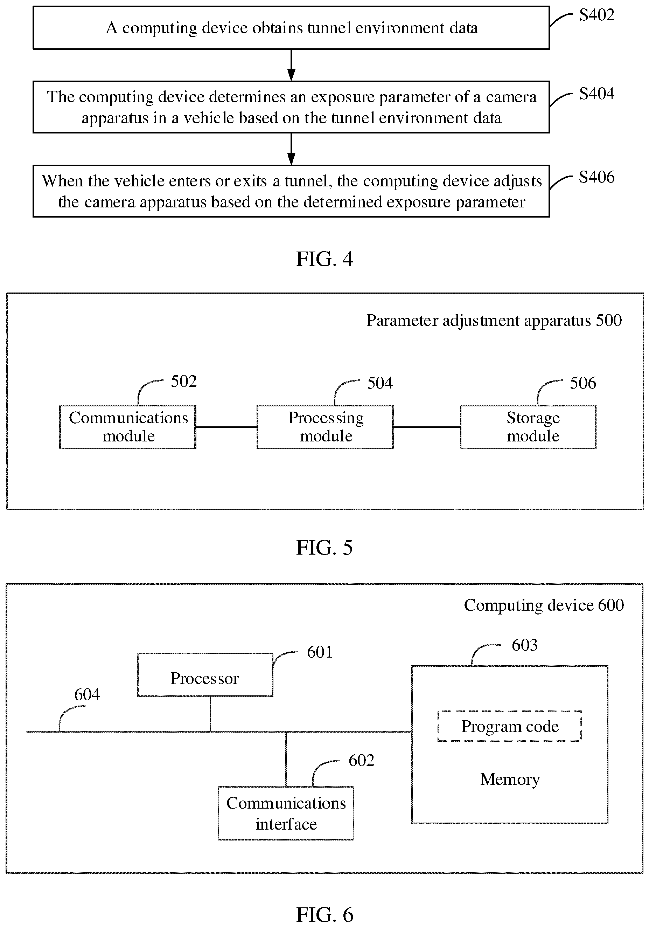

The following describes a related method embodiment in the present invention. FIG. 4 is a schematic flowchart of a parameter adjustment method according to an embodiment of the present invention. The method shown in FIG. 4 is applied to a vehicle installed with a camera apparatus. The camera apparatus is used as an example for describing related content in the present invention. The method may include the following implementation steps.

Step S402: A computing device obtains tunnel environment data. The tunnel environment data is tunnel-related environment data that is collected before the vehicle enters or exits a tunnel.

In the present invention, the computing device obtains the tunnel environment data that is present before the vehicle enters or exits the tunnel. In an example, the tunnel environment data may include tunnel internal environment data and tunnel external environment data. The environment data includes but is not limited to a location of the tunnel, a name of the tunnel, light brightness, weather data, time data, and time zone data. Light brightness outside the tunnel may also be referred to as environmental brightness. The weather data is data used to describe a weather condition, and may include but is not limited to temperature, atmospheric pressure, rainfall, and snowfall. The time data herein may be current system time of the vehicle; may be predicted time at which the vehicle arrives at a tunnel portal, where the tunnel portal is a tunnel portal from which the vehicle enters or exits the tunnel; or may be other time-related data. The time zone data may mean a time zone in which the vehicle is currently located, for example, UTC+8 or 120°N.

In another example, the tunnel environment data may be tunnel image data, that is, a tunnel image including a tunnel portal area. The tunnel portal area is an image area that is occupied, in the tunnel image, by a tunnel portal from which the vehicle enters or exits the tunnel. The scenario in which the vehicle enters the tunnel in FIG. 3A is used as an example: The tunnel portal is a tunnel portal from which the vehicle enters the tunnel, and may specifically be a tunnel portal 1 in the figure. The scenario in which the vehicle exits the tunnel in FIG. 3B is used as an example: The tunnel portal is a tunnel exit from which the vehicle exits the tunnel, and may specifically be a tunnel portal 2 in FIG. 3B.

The tunnel image is an image that is captured before the vehicle enters or exits the tunnel. In specific implementation, the tunnel image may specifically be an image that is captured by the computing device by calling the camera apparatus in the vehicle before the vehicle enters or exits the tunnel. Alternatively, the tunnel image may be an image that is captured by the computing device by calling a camera apparatus in another device before the vehicle enters or exits the tunnel. This is not limited in the present invention which is defined in the appended claims.

In an example, before obtaining the tunnel environment data, the computing device needs to determine whether a preset condition is satisfied. If the preset condition is satisfied, the computing device may perform step S402; otherwise, end the procedure. The preset condition may be a condition self-defined by a system. For example, the preset condition may include any one or a combination of a plurality of the following conditions.

(1) A time interval between the current system time and the predicted time at which the vehicle arrives at the tunnel portal is less than or equal to first preset duration.

Specifically, the computing device may calculate, based on positioning information of the vehicle and map information of the tunnel, the predicted time at which the vehicle arrives at the tunnel portal. The positioning information of the vehicle may be a current location of the vehicle obtained through GPS positioning. The map information is spatial information including the tunnel that the vehicle enters and exits, and is used to reflect related information of the tunnel on a map, for example, the location of the tunnel, a length of the tunnel, and the name of the tunnel.

In actual application, the computing device calculates, through prediction, time at which the vehicle arrives at the tunnel portal, that is, the predicted time, based on the current location of the vehicle and the map information that may specifically be a current location of the vehicle on the map and a location of the tunnel portal on the map, and optionally based on an average driving speed of the vehicle.

The first preset duration is a time threshold self-defined by the system, and may specifically be an empirical value obtained by the system through statistics collection based on a series of data. In actual application, considering timeliness of data, the first preset duration may be arbitrarily set within a proper duration range, for example, 0-8 minutes.

(2) A distance between the current location of the vehicle and the tunnel portal is less than or equal to a first preset distance. The first preset distance may also be self-defined by the system, for example, 100 meters.

A specific implementation of determining a distance by the computing device is not limited in the present invention which is defined in the appended claims.

The distance is a distance between the current location of the vehicle and the tunnel portal. For example, the computing device may estimate the distance between the current location of the vehicle and the tunnel portal through GPS positioning. Specifically, the computing device determines the current location of the vehicle through GPS positioning, and then calculates a distance between the current location of the vehicle and the tunnel portal that are on the map. For another example, the computing device may detect the distance between the current location of the vehicle and the tunnel portal by using a radar sensor installed on the vehicle, or may detect the distance between the current location of the vehicle and the tunnel portal by using a laser rangefinder installed on the vehicle.

(3) A ratio (or a proportion) of the tunnel portal area to the tunnel image is greater than or equal to a first preset threshold. The tunnel image is a tunnel image that includes the tunnel portal area and that is captured before the vehicle enters or exits the tunnel. For the tunnel portal area and the tunnel image, refer to related descriptions in the foregoing embodiments. Details are not described herein again. The first preset threshold may also be self-defined by the system. For example, the first preset threshold is an empirical value that is set based on a user's experience, or is calculated based on a series of statistical data. This is not limited in the presentinvention which is defined in the appended claims.

Optionally, when the tunnel environment data is the tunnel image including the tunnel portal area, the computing device may first call the camera apparatus to capture the tunnel image that is present before the vehicle enters or exits the tunnel. Then, the computing device determines whether the proportion of the tunnel portal area to the tunnel image exceeds the first preset threshold. If the proportion exceeds the first preset threshold, the computing device may continue to perform S404; or if the proportion does not exceed the first preset threshold, the computing device may end the procedure or perform step S402 again.

In the present invention, the computing device may include but is not limited to an automobile, a mobile phone, a tablet computer (table personal computer), a personal digital assistant (personal digital assistant, PDA), a mobile Internet device (mobile internet device, MID), a wearable device (wearable device), and other devices supporting communication with a network.

Step S404: The computing device determines an exposure parameter of the camera apparatus in the vehicle based on the tunnel environment data.

In an example not falling into the scope of the appended claims but useful for understanding the present invention, the computing device may input the tunnel environment data to a preset neural network model, to calculate the exposure parameter of the camera apparatus. The neural network model may be a model preobtained through training, and is used to predict the exposure parameter of the camera apparatus. The model includes but is not limited to a convolutional neural network model, a recurrent neural network model, a deep neural network model, a feed-forward neural network model, a deep belief network model, a generative adversarial network model, and other deep learning models.

It can be understood that, to ensure precision of the model, model training needs to be performed repeatedly. In addition, a large quantity of computing resources need to be occupied for each time of model training. To reduce resource overheads of the computing device, model training is implemented on a cloud side. An example in which a cloud-side server trains an initial model is used below for describing how to obtain a neural network model through training.

Specifically, the cloud-side server may obtain a plurality of groups of training samples. Each group of training samples includes historical tunnel environment data and a historical exposure parameter (an expected result) corresponding to the camera apparatus. Then, the cloud-side server may perform training on the to-be-trained initial model one or more times by using the plurality of groups of training samples, to obtain a trained neural network model. Specifically, the computing device may input each group of training samples to the initial model to calculate a calculation result (that is, the predicted exposure parameter of the camera apparatus) corresponding to the training sample, and then compare the expected result and the calculation result that are corresponding to the training sample, to obtain a deviation corresponding to the training sample. Next, back propagation is performed on the initial model (that is, a weight of each network layer in the initial model is adjusted (when the network layer further includes a bias, the bias may further be adjusted)) based on the deviation corresponding to the training sample, to obtain a trained neural network model.

Optionally, after obtaining the trained neural network model, the cloud-side server may cache the trained neural network model into the cloud-side server. The computing device may obtain the neural network model from the cloud-side server depending on an actual requirement, and deploy the neural network model in the computing device locally, so as to subsequently use the neural network model to predict the exposure parameter of the camera apparatus.

For example, the tunnel environment data may include $m$ pieces of environment data such as time data, weather data, environmental brightness, and tunnel brightness. A mathematical expression of the trained neural network model may be

$$c = c_0 + \sum_{i=1}^{m}(x_i - x_0) \times b_i \times p_i$$

.

$c$ is the exposure parameter of the camera apparatus. $c_0$ is an initial exposure parameter of the camera apparatus, or may be an average-exposure parameter of the camera apparatus. $i$ is the $m$ pieces of environment data included in the tunnel environment parameter. If the tunnel environment data includes time data, weather data, environmental brightness, and tunnel brightness, $m$ is equal to 4. $x_i$ is a value of the environment data $i$, for example, a value of the input time data.

$x_0$ is a standard value of the environment data $i$, $b_i$ is a compensation coefficient corresponding to the environment data

$$\sum_{i=1}^{n} p_i = 1$$

i, and $p_i$ is a weight corresponding to the environment data $i$ and is a constant less than or equal to 1. , that is, a sum of $m$ pieces of $p_i$ is 1. $c_0$, $x_0$, $b_i$, and $p_i$ are all obtained through training based on the historical environment data and the historical exposure parameter of the camera apparatus. How these parameter values are obtained through training is not detailed in the present invention.

Correspondingly, in a use process, the computing device may input the tunnel environment data obtained in S402 to the neural network model, to calculate, according to the mathematical expression of the neural network model, the exposure parameter c that is of the camera apparatus and that is corresponding to the tunnel environment data.

In an example according to the invention, when the tunnel environment data is environment data including weather data, environmental brightness, and the like, the computing device may query a database for an exposure compensation parameter that matches the tunnel environment data. Then, the computing device may obtain the initial exposure parameter of the camera apparatus, and calculate, based on the initial exposure parameter and the exposure compensation parameter, the exposure parameter of the camera apparatus that is present when the vehicle enters or exits the tunnel. The initial exposure parameter may be self-defined by the system, for example, an empirical exposure parameter that is set empirically. The initial exposure parameter is an average-exposure parameter of N frames of images that are captured before the vehicle enters or exits the tunnel, where N is a self-defined positive integer. In actual application, to ensure precision of the parameter, N may usually be set to a relatively large value, for example, 200.

The database may be a database deployed in the computing device locally, or may be a database deployed in another device or a cloud-side device. This is not limited in the present invention. The database stores/includes at least a correspondence between the tunnel environment data and at least one compensation parameter. Each compensation parameter has a corresponding confidence level, and the confidence level is used to indicate a chance (or a probability) of selecting the compensation parameter as the exposure compensation parameter. The exposure compensation parameter found by the computing device is a compensation parameter with a highest confidence level in the at least one compensation parameter.

The following uses examples to describe related embodiments in which the computing device obtains the exposure compensation parameter that matches the tunnel environment data.

In a possible embodiment, when the tunnel environment data includes a plurality of pieces of environment data such as weather data and environmental brightness, a corresponding importance degree is configured for each piece of environment data, where the importance degree is used to indicate a degree of importance of the environment data for querying for the exposure compensation parameter. The plurality of pieces of environment data included in the same group of tunnel environment data have different importance degrees from each other. In other words, any two pieces of environment data have different importance degrees, to avoid subsequent occurrence of a data match error. Correspondingly, the computing device may successively obtain, through matching in a preset sorting order based on the importance degree of each piece of environment data by using the database, an exposure compensation parameter corresponding to the environment data. The preset sorting order is self-defined by the system, and is, for example, a descending order of the importance degrees. For example, if an importance degree of the weather data is higher than that of the environmental brightness, it indicates that the importance degree of the weather data for determining the exposure compensation parameter is higher. Correspondingly, the computing device may preferentially perform matching on the weather data, and then perform matching on the environmental brightness. The following provides a detailed description by using an example.

That the vehicle enters a tunnel A is used as an example. The database includes n pieces of scenario data, and each piece of scenario data includes a correspondence between a group of historical tunnel environment data and a plurality of historical compensation parameters. Each group of tunnel environment data includes a plurality of pieces of environment data, for example, weather data, time data, light luminance inside the tunnel (referred to as tunnel brightness for short), and light luminance outside the tunnel (referred to as environmental brightness for short). A corresponding importance degree is correspondingly configured for each piece of environment data, and a corresponding confidence level is correspondingly configured for each historical compensation parameter. For details, refer to related descriptions in the foregoing embodiments. Details are not described herein again. Table 1 specifically lists the n pieces of scenario data in the database as follows:

**Table 1**

| Scenario data | Historical tunnel data | Importance degree | Historical compensation parameter | Confidence level |
|---|---|---|---|---|
| Scenario 1 | Time data | 0.2 | Compensation parameter 11 | 0.5 |
| | Weather data | 0.15 | Compensation parameter 12 | 0.9 |
| | Tunnel brightness | 0.12 | Compensation parameter 13 | 0.5 |
| | Environmental brightness | 0.11 | Compensation parameter 14 | 0.6 |
| | ... | ... | ... | ... |
| Scenario 2 | Time data | 0.2 | Compensation parameter 21 | 0.3 |
| | Weather data | 0.15 | Compensation parameter 22 | 0.9 |
| | Tunnel brightness | 0.12 | Compensation parameter 23 | 0.4 |
| | Environmental brightness | 0.11 | Compensation parameter 24 | 0.5 |
| | ... | ... | ... | ... |
| ... | | | | |
| Scenario n | Time data | 0.2 | Compensation parameter n1 | 0.4 |
| | Weather data | 0.15 | Compensation parameter n2 | 0.3 |
| | Tunnel brightness | 0.12 | Compensation parameter n3 | 0.1 |
| | Environmental brightness | 0.11 | Compensation parameter n4 | 0.5 |
| | ... | ... | ... | ... |

By using the database described in Table 1, the following describes how to query the database for the exposure compensation parameter that is of the camera apparatus and that is corresponding to the tunnel environment data. After obtaining the tunnel environment data, the computing device successively screens, based on data importance of each piece of data, a scenario that does not satisfy a condition. For example, because an importance degree of time data is highest, a scenario in which a difference between time data in the historical tunnel data and obtained time data is relatively large is first screened out. Because an importance degree of weather data is second-most highest, a scenario in which a difference between weather data and obtained weather data is relatively large is then screened out from remaining scenarios. The rest may be deduced by analogy, to finally find a best-matched scenario. Inappropriate scenarios are screened out based on a difference between the historical tunnel data and obtained tunnel data, a threshold is set. To be specific, a scenario in which a difference is greater than the preset threshold is screened out, and a scenario in which a difference does not exceed the preset threshold is reserved.

In this example, after the best-matched scenario is obtained through matching by performing the foregoing operation, it is assumed that scenario data that matches or is similar to the tunnel environment data and that is determined by the computing device is data of the scenario 2 in Table 1. Correspondingly, the computing device selects from four compensation parameters corresponding to the data of the scenario 2 (which are specifically the compensation parameters 21 to 24 in Table 1), the compensation parameter 22 with a highest confidence level as the exposure compensation parameter of the camera apparatus.

In another possible embodiment, when the tunnel environment data includes a plurality of pieces of environment data such as weather data and environmental brightness, a corresponding weight is configured for each piece of environment data, where the weight is used to indicate magnitude of impact or a degree of importance of the environment data for determining the exposure compensation parameter. The weight of each piece of environment data is a constant greater than 0 and less than or equal to 1. A sum of weights of the plurality of pieces of environment data included in the same group of tunnel environment data is 1. Correspondingly, the computing device may obtain, through matching based on each group of environment data in the tunnel environment data and the weight of the environment data by using the database, at least one compensation parameter corresponding to the tunnel environment data, and select, from the at least one compensation parameter, a compensation parameter with a highest confidence level as the exposure compensation parameter of the camera apparatus.

The computing device may calculate a deviation between the tunnel environment data and the historical tunnel data in the database according to the following Formula (1):

$$y = \sum_{i=1}^{m} (y_i - y_i') \times p_i \times q_i$$

Formula (1)

The deviation is used to reflect a value of a difference (or a degree of similarity) between the tunnel environment data and the historical tunnel data. A larger deviation indicates a higher degree of difference and a lower degree of similarity between the two pieces of data. Otherwise, a smaller deviation indicates a lower degree of difference and a higher degree of similarity between the two pieces of data. $y$ is the deviation. $m$ is a quantity of pieces of environment data included in the tunnel environment data. $y_i$ is environment data $i$ in the tunnel environment data. $y_i'$ is environment data $i$ in the historical tunnel environment data. $p_i$ is a weight corresponding to the environment data $i$, and is a constant greater than 0 and less than or equal to 1. $q_i$ is a conversion coefficient corresponding to the environment data i, and is used to convert the data ( $y_i - y_i'$ ) into data of a specified order of magnitude, where the specified order of magnitude is an order of magnitude self-defined by the system. For example, the data ( $y_i - y_i'$ ) is converted into data between 0 and 10.

It can be understood that the computing device may calculate a deviation between the tunnel environment data and each piece of historical tunnel environment data in the database according to Formula (1); select, from the database, a group of historical tunnel environment data corresponding to a minimum deviation; and use at least one historical compensation parameter corresponding to the selected historical tunnel data as the at least one compensation parameter that correspondingly matches the tunnel environment data.

Referring to the example described in Table 1, the database includes the n pieces of scenario data, and each piece of scenario data includes a correspondence between a piece of historical tunnel environment data and a plurality of historical compensation parameters. Each piece of historical tunnel environment includes n pieces of environment data. Only weather data, time data, tunnel brightness, and environment data are used as an example for description herein. A corresponding weight is correspondingly configured for each piece of environment data, and a corresponding confidence level is correspondingly configured for each historical compensation parameter. For details, refer to related descriptions in the foregoing embodiments. Table 2 lists the n pieces of scenario data in the database as follows:

**Table 2**

| Scenario data | Historical tunnel data | Weight | Historical compensation parameter | Confidence level |
|---|---|---|---|---|
| Scenario 1 | Time data | 0.4 | Compensation parameter 11 | 0.5 |
| | Weather data | 0.3 | Compensation parameter 12 | 0.9 |
| | Tunnel brightness | 0.2 | Compensation parameter 13 | 0.5 |
| | Environmental brightness | 0.1 | Compensation parameter 14 | 0.6 |
| | ... | ... | ... | ... |
| Scenario 2 | Time data | 0.4 | Compensation parameter 21 | 0.3 |
| | Weather data | 0.3 | Compensation parameter 22 | 0.9 |
| | Tunnel brightness | 0.2 | Compensation parameter 23 | 0.4 |
| | Environmental brightness | 0.1 | Compensation parameter 24 | 0.5 |
| | ... | ... | ... | ... |
| ... | | | | |

(continued)

| Scenario data | Historical tunnel data | Weight | Historical compensation parameter | Confidence level |
|---|---|---|---|---|
| Scenario n | Time data | 0.4 | Compensation parameter n1 | 0.4 |
| | Weather data | 0.3 | Compensation parameter n2 | 0.3 |
| | Tunnel brightness | 0.2 | Compensation parameter n3 | 0.1 |
| | Environmental brightness | 0.1 | Compensation parameter n4 | 0.5 |
| | ... | ... | ... | ... |

In the database described in Table 2, after obtaining the tunnel environment data, the computing device may calculate deviations between the n pieces of scenario data (that is, n pieces of historical tunnel environment data) and the tunnel environment data by using the deviation calculation formula shown in Formula (1); and then select, from the n pieces of scenario data, a piece of scenario data corresponding to a minimum deviation as scenario data that matches (or is closest to) the tunnel environment data. Herein, it is assumed that data of the scenario 1 is selected. Further, the computing device may use a plurality of historical compensation parameters corresponding to the scenario 1 (which may specifically be the foregoing compensation parameters 11 to 14) as a plurality of compensation parameters in the database that match the tunnel environment data. Then, the computing device selects, from the plurality of compensation parameters (the compensation parameters 11 to 14), the compensation parameter 12 with a highest confidence level as the exposure compensation parameter of the camera apparatus.

In another example, when the tunnel environment data is tunnel image data, that is, the tunnel image that includes the tunnel portal area and that is captured before the vehicle enters or exits the tunnel, for details about the tunnel image and the tunnel portal area, reference may be made to related descriptions in the foregoing embodiments. Details are not described herein again. In this case, the computing device may analyze the tunnel image, and determine whether the tunnel portal area in the tunnel image is overexposed and/or underexposed. If the tunnel portal area is neither overexposed nor underexposed, the procedures may end, or an exposure parameter that is of the camera apparatus and that is corresponding to the tunnel image may be directly used as the exposure parameter, of the camera apparatus in the vehicle, that is present when the vehicle enters or exits the tunnel.

Correspondingly, if the tunnel portal area is overexposed, an exposure of the camera apparatus may be reduced, so as to obtain an exposure parameter of the camera apparatus that is present when the tunnel portal area is not overexposed. Specifically, before the vehicle enters or exits the tunnel, the computing device may call the camera apparatus to capture the tunnel image including the tunnel portal area, and then determine, through analysis, whether the tunnel portal area is overexposed. If the tunnel portal area is overexposed, the computing device may make an adjustment to reduce the exposure of the camera apparatus; use the adjusted camera apparatus to recapture the tunnel image that includes the tunnel portal area and that is present before the vehicle enters or exits the tunnel; and determine, through analysis, whether the tunnel portal area is overexposed. The computing device repeats the operation steps until the computing device determines that the tunnel portal area in the tunnel image is not overexposed. Finally, the computing device may use an exposure parameter that is corresponding to the tunnel image including the tunnel portal area and that is present when the tunnel portal area is not overexposed, as the exposure parameter of the camera apparatus that is present when the vehicle enters or exits the tunnel.

The computing device may reduce the exposure of the camera apparatus in at least one of the following adjustment manners: reducing an aperture size, increasing a shutter speed, reducing an exposure time, reducing an exposure value, and the like. The exposure parameter of the camera apparatus is a parameter used for affecting the exposure of the camera apparatus. The parameter includes but is not limited to an aperture size, a shutter speed, an exposure time, an exposure value, and light sensitivity.

If the tunnel portal area is underexposed, the computing device may make an adjustment to increase an exposure of the camera apparatus, so as to obtain an exposure parameter of the camera apparatus that is present when the tunnel portal area is not underexposed. Specifically, before the vehicle enters or exits the tunnel, the computing device may call the camera apparatus to capture the tunnel image including the tunnel portal area, and then determine, through analysis, whether the tunnel portal area is underexposed. If the tunnel portal area is overexposed, the computing device may make an adjustment to increase the exposure of the camera apparatus; use the adjusted camera apparatus to recapture the tunnel image that includes the tunnel portal area and that is present before the vehicle enters or exits the tunnel; and determine, through analysis, whether the tunnel portal area is underexposed. The computing device repeats the operation steps until the computing device determines that the tunnel portal area in the tunnel image is not underexposed. Finally, the computing device may use an exposure parameter that is corresponding to the tunnel image including the tunnel portal area and that is present when the tunnel portal area is not underexposed, as the exposure parameter of the camera apparatus that is present when the vehicle enters or exits the tunnel. The computing device may increase the exposure of the camera apparatus in at least one of the following adjustment manners: increasing an aperture size, reducing a shutter speed, increasing an exposure time, increasing an exposure value, and the like.

Optionally, the computing device may use the exposure parameter that is corresponding to the tunnel image including the tunnel portal area and that is present when the tunnel portal area is neither overexposed nor underexposed, as the exposure parameter of the camera apparatus that is present when the vehicle enters or exits the tunnel. For manners of obtaining, through adjustment, the exposure parameters of the camera apparatus when the tunnel portal area is overexposed and underexposed, refer to related descriptions in the foregoing embodiments. Details are not described herein again.

In an example, when analyzing the tunnel portal area in the tunnel image, the computing device may determine whether the tunnel portal area satisfies the following preset overexposure condition. If the preset overexposure condition is satisfied, it may be determined that the tunnel portal area is overexposed; otherwise, it may be determined that the tunnel portal area is not overexposed. The overexposure condition is self-defined by the system, and is used to determine whether the image area is overexposed. For example, the overexposure condition may include but is not limited to any one or a combination of a plurality of the following: (1) An average pixel brightness value (that is, an average value of brightness values of pixels) of the tunnel portal area is greater than or equal to a first preset brightness. The first preset brightness may be self-defined by the system, for example, an empirical value that is set based on a user's experience. (2) A ratio of the average pixel brightness value of the tunnel portal area to an average pixel brightness value of the tunnel image including the tunnel portal area is greater than or equal to a first preset ratio. (3) A ratio of the average pixel brightness value of the tunnel portal area to an average pixel brightness value of a background area is greater than or equal to a second preset ratio, where the background area is an image area in the tunnel image other than the tunnel portal area. Both the first preset ratio and the second preset ratio may be self-defined by the system, for example, specified empirical values. The two preset ratios may be identical or different.

In an example, when analyzing the tunnel portal area in the tunnel image, the computing device may determine whether the tunnel portal area satisfies the following preset underexposure condition. If the preset underexposure condition is satisfied, it may be determined that the tunnel portal area is underexposed; otherwise, it may be determined that the tunnel portal area is not underexposed. The underexposure condition is self-defined by the system, and is used to determine whether the image area is underexposed. For example, the underexposure condition may include but is not limited to any one or a combination of a plurality of the following: (1) An average pixel brightness value (that is, an average value of brightness values of pixels) of the tunnel portal area is less than or equal to a second preset brightness. The second preset brightness may be self-defined by the system, for example, an empirical value that is set based on a user's experience. (2) A ratio of the average pixel brightness value of the tunnel portal area to an average pixel brightness value of the tunnel image including the tunnel portal area is less than or equal to a third preset ratio. (3) A ratio of the average pixel brightness value of the tunnel portal area to an average pixel brightness value of an image area in the tunnel image other than the tunnel portal area is less than or equal to a fourth preset ratio. Both the third preset ratio and the fourth preset ratio may be self-defined by the system, for example, specified empirical values. The two preset ratios may be identical or different.

Step S406: When the vehicle enters or exits the tunnel, the computing device adjusts the camera apparatus based on the determined exposure parameter.

In the present invention, after determining the exposure parameter of the camera apparatus in step S404, detects the computing device whether the vehicle currently enters or exits the tunnel. When detecting that the vehicle enters or exits the tunnel, the computing device set the determined exposure parameter as the exposure parameter of the camera apparatus, so that after the vehicle enters or exits the tunnel, the camera apparatus can capture a clear image with high picture quality by using the exposure parameter. In a self-driving scenario, the vehicle may analyze a road condition based on the image captured by the camera apparatus, so as to control vehicle driving, thereby effectively ensuring safety of vehicle driving.

Optionally, a specific implementation of detecting, by the computing device, whether the vehicle currently enters or exits the tunnel may be: detecting, by using the GPS positioning system, whether the current location of the vehicle is at the tunnel portal; or determining whether the current system time is equal to the predicted time, where the predicted time is the time at which the vehicle arrives at the tunnel portal. For a related description of the predicted time, refer to related descriptions in the foregoing embodiments. Details are not described herein again.

In an example, to improve a photographing effect of the camera apparatus and ensure safety of vehicle driving, after the vehicle enters or exits the tunnel, the computing device may further make a fine adjustment on the exposure parameter of the camera apparatus. For example, the computing device may capture M frames of images that are present after the vehicle enters or exits the tunnel, and obtain an average pixel brightness value of the M frames of images, to obtain a corresponding average brightness value. If the average brightness value falls within a preset standard brightness range, the procedure may end, and the exposure parameter of the camera apparatus may not be adjusted.

If the average brightness value is greater than an upper limit of the preset standard brightness range, the exposure parameter of the camera apparatus may be adjusted to reduce the exposure of the camera apparatus, so that an average brightness value of M frames of images recaptured by using the adjusted camera apparatus falls within the preset standard brightness range. For example, when determining that the average brightness value of the M frames of images is greater than the upper limit, the computing device may reduce the exposure by reducing the exposure time according to a preset adjustment rule, for example, reducing an exposure time of 0.5s each time, so that the average brightness of the captured M frames of images falls within the preset standard brightness range. In other words, it is ensured that the captured M frames of images are neither overexposed nor underexposed.

Correspondingly, if the average brightness value is less than a lower limit of the preset standard brightness range, the exposure parameter of the camera apparatus may be adjusted to increase the exposure of the camera apparatus, so that an average brightness value of M frames of images recaptured by using the adjusted camera apparatus falls within the preset standard brightness range. For a manner of increasing or reducing the exposure, refer to related descriptions in the foregoing embodiments. Details are not described herein again. The preset standard brightness range is self-defined by the system, for example, 90-110. M is a positive integer.

In an example, the computing device may associatively store, into the database, the tunnel environment data and the exposure parameter that is of the camera apparatus and that is corresponding to the tunnel environment data, so that when the vehicle enters or exits the tunnel next time, the exposure parameter of the camera apparatus can be directly obtained from the database based on an identifier of the tunnel (for example, the location of the tunnel or the name of the tunnel), thereby reducing computational overheads. Optionally, the exposure parameter of the camera apparatus may be an exposure parameter obtained through fine adjustment.

Specifically, the computing device may first query whether the database stores the correspondence between the tunnel environment data and the historical exposure parameter of the camera apparatus. If the database stores the correspondence, the computing device may continue to query whether the historical exposure parameter corresponding to the tunnel environment data is consistent with a currently calculated exposure parameter. If the two exposure parameters are consistent, the procedure may end. If the two exposure parameters are inconsistent, the tunnel environment data and the corresponding exposure parameter may be sent to the database, so that the database updates the exposure parameter corresponding to the tunnel environment data. Correspondingly, if the database does not store the correspondence between the tunnel environment data and the exposure parameter, the computing device may send the tunnel environment data and the corresponding exposure parameter of the camera apparatus to the database, so as to store the correspondence between the tunnel environment data and the corresponding exposure parameter into the database.

Alternatively, the computing device may directly send, to the database, the tunnel environment data and the exposure parameter that is of the camera apparatus and that is corresponding to the tunnel environment data. If the database stores the correspondence between the tunnel environment data and the historical exposure parameter of the camera apparatus, the database may query whether the historical exposure parameter that is corresponding to the tunnel environment data and that is in the database is consistent with a currently received exposure parameter. If the two exposure parameters are consistent, the procedure may end and storage is skipped. If the two exposure parameters are inconsistent, the database may store the tunnel environment data and the historical exposure parameter of the camera apparatus, so as to improve precision of model training. Alternatively, the database may directly update and store the exposure parameter corresponding to the tunnel environment data. Correspondingly, if the database does not store the tunnel environment data and the corresponding exposure parameter, the database may associatively store the tunnel environment data and the corresponding exposure parameter directly, that is, store the correspondence between the tunnel environment data and the corresponding exposure parameter.

By implementing the embodiments of the present invention, the exposure parameter of the camera apparatus can be adjusted in a timely and suitable manner when the vehicle enters or exits the tunnel. This is conducive to capturing a clear image with high picture quality, thereby ensuring definition of the captured image, and further improving safety of vehicle driving.

With reference to the embodiments shown in FIG. 1 to FIG. 4, the following describes a related apparatus and device to which the present invention is applicable. FIG. 5 is a schematic structural diagram of a parameter adjustment apparatus according to an embodiment of the present invention. The parameter adjustment apparatus 500 includes a communications module 502 and a processing module 504. The processing module 504 is configured to control and manage actions of the parameter adjustment apparatus 500. The processing module 504 is configured to perform steps S404 and S406 in FIG. 4, and/or perform other content of the technology described in this specification. The communications module 502 is configured to communicate with another module or device. The communications module 502 is configured to perform step S402 in FIG. 4. Alternatively, the communications module 502 may be configured to obtain, from a database of a cloud-side server, an exposure parameter that is of a camera apparatus and that is corresponding to tunnel environment data, and may also be configured to send the tunnel environment data and a calculated exposure parameter of the camera apparatus to the database of the cloud-side server.

Optionally, the parameter adjustment apparatus 500 may further include a storage module 506. The storage module 506 is configured to store program code and data of the parameter adjustment apparatus 500, for example, store program code used for parameter adjustment. The processing module 504 is configured to invoke the program code in the storage module 506, to implement implementation steps in the method embodiment shown in FIG. 4, and/or implement other content steps of the technology described in this specification.

The processing module 504 may be a processor or a controller, such as a central processing unit (Central Processing Unit, CPU), a general-purpose processor, a digital signal processor (Digital Signal Processor, DSP), an application-specific integrated circuit (Application Specific Integrated Circuit, ASIC), a field programmable gate array (Field-Programmable Gate Array, FPGA), or another programmable logical device, a transistor logical device, a hardware component, or any combination thereof. The controller/processor may implement or execute various example logical blocks, modules, and circuits described with reference to content disclosed in the present invention. The processor may be a combination of processors implementing a computing function, for example, a combination of one or more microprocessors, or a combination of the DSP and a microprocessor. The communications module 502 may be a communications interface, a transceiver, a transceiver circuit, or the like. The communications interface is a generic term, and may include one or more interfaces, for example, an interface between the communications module and the processing module, and an interface between a computing device and another device. The storage module 506 may be a memory, or another service or module configured to provide a storage function.

When the processing module 504 is a processor, the communications module 502 is a communications interface, and the storage module 506 is a memory, the parameter adjustment apparatus in this embodiment of the present invention may be a parameter adjustment apparatus (or a computing device) shown in FIG. 6.

Referring to FIG. 6, the computing device 600 includes one or more processors 601, a communications interface 602, and a memory 603. The processor 601, the communications interface 602, and the memory 603 are connected to each other through a bus. That a connection is implemented through a bus 604 is used in this embodiment of the present invention.

The processor 601 may include one or more general purpose processors, for example, a central processing unit (Central Processing Unit, CPU). The processor 601 may be configured to run a program, in related program code, of any one or more of the following functional modules: the communications module, the processing module, the storage module, and the like. In other words, the processor 601 can implement any one or more functions of the functional modules such as the communications module and the processing module by executing the program code. For details about the communications module and the processing module, refer to related descriptions in the foregoing embodiments.

The communications interface 602 may be a wired interface (for example, an Ethernet interface) or a wireless interface (for example, a cellular network interface or an interface using a wireless local network), and is configured to communicate with another module/device. For example, the communications interface 602 in this embodiment of the present invention may specifically be configured to send tunnel environment data, an exposure parameter of a camera apparatus, and the like to a database of a cloud-side server.

The memory 603 may include a volatile memory (Volatile Memory), such as a random access memory (Random Access Memory, RAM); or the memory may include a non-volatile memory (Non-Volatile Memory), such as a read-only memory (Read-Only Memory, ROM), a flash memory (Flash Memory), a hard disk drive (Hard Disk Drive, HDD), or a solid-state drive (Solid-State Drive, SSD); or the memory 603 may include a combination of the memories of the foregoing types. The memory 603 is configured to store a set of program code, so that the processor 601 invokes the program code stored in the memory 603, to implement a function of the communications module and/or the processing module in this embodiment of the present invention.

It should be noted that FIG. 6 is merely a possible implementation of this embodiment of this application. In actual application, a training platform may alternatively include more or fewer components. This is not limited herein. For content that is not shown or described in this embodiment of this application, refer to related descriptions in the embodiment shown in FIG. 4. Details are not described herein again.

A computer non-transitory storage medium stores an instruction. When the instruction is run on a processor, the method procedure shown in FIG. 4 is implemented.

when a computer program product is run on a processor, the method procedure shown in FIG. 4 is implemented.

Methods or algorithm steps described in combination with the content disclosed in this embodiment of the present invention may be implemented by hardware, or may be implemented by a processor by executing a software instruction. The software instruction may include a corresponding software module. The software module may be stored in a random access memory (random access memory, RAM), a flash memory, a read-only memory (read only memory, ROM), an erasable programmable read-only memory (erasable programmable ROM, EPROM), an electrically erasable programmable read-only memory (electrically EPROM, EEPROM), a register, a hard disk, a mobile hard disk, a compact disc read-only memory (CD-ROM), or any other form of storage medium well-known in the art. For example, a storage medium is coupled to a processor, so that the processor can read information from the storage medium or write information into the storage medium. Certainly, the storage medium may be a component of the processor. The processor and the storage medium may be located in an ASIC. In addition, the ASIC may be located in a computing device. Certainly, the processor and the storage medium may exist in the device as discrete components.

A person of ordinary skill in the art may understand that all or some of the processes of the methods in the embodiments may be implemented by a computer program instructing relevant hardware. The program may be stored in a computer-readable storage medium. When the program runs, the processes of the methods in the embodiments are performed. The foregoing storage medium includes: any medium that can store program code, such as a ROM, a RAM, a magnetic disk, or an optical disc.

**Claims**

1. A computer implemented method for adjusting a camera apparatus (1026), comprising:

   obtaining (S403) tunnel environment data, wherein the tunnel environment data is tunnel-related environment data that is collected before a vehicle (100, 202) enters or exits a tunnel, and the vehicle (100, 202) is installed with the camera apparatus used for image capture;
   determining (S404) an exposure parameter of the camera apparatus in the vehicle (100, 202) based on the tunnel environment data; and
   when the vehicle (100, 202) enters or exits the tunnel, adjusting (S406) the camera apparatus based on the exposure parameter;
   **characterized in that** the tunnel environment data comprises a plurality of pieces of different types of tunnel environment data;
   wherein the determining (S404) an exposure parameter of the camera apparatus in the vehicle (100, 202) based on the tunnel environment data comprises:

   obtaining an exposure compensation parameter from a database (204) based on the tunnel environment data, wherein the database (204) comprises a plurality of scenarios each including a combination of historical tunnel environment data of the different types each associated with a respective importance degree, a corresponding historical compensation parameter and a corresponding confidence level, wherein the confidence level is used to indicate a probability of selecting the corresponding compensation parameter as the exposure compensation parameter,
   wherein the exposure compensation parameter is obtained by first screening out scenarios for which a difference between a type of tunnel environment data and its corresponding historical tunnel environment data having the highest importance degree is larger than a threshold and reserving scenarios for which the difference is smaller than the threshold, then successively screening out scenarios for which a difference between a type of tunnel environment data and its corresponding historical tunnel environment data having a next lower importance degree is larger than a threshold and reserving scenarios for which the difference is smaller than the threshold until finding a best-matched scenario, and selecting from the best-matched scenario the historical compensation parameter with the highest confidence level as the exposure compensation
   obtaining the exposure parameter of the camera apparatus based on an initial exposure parameter and the exposure compensation parameter, wherein the initial exposure parameter is an average-exposure parameter of N frames of images that are captured before the vehicle (100, 202) enters or exits the tunnel, wherein N is a positive integer.

2. The method according to claim 1, wherein the different types of tunnel environment data comprise light luminance inside the tunnel, environmental brightness outside the tunnel, weather data, and time data.

3. The method according to any one of claims 1 to 2,

   wherein the tunnel environment data is a tunnel image captured by the camera apparatus (1026) comprising a tunnel portal area, and the tunnel portal area is an image area that is occupied by a tunnel portal of the tunnel in the tunnel image; and
   the determining (S404) an exposure parameter of the camera apparatus in the vehicle (100, 202) based on the tunnel environment data comprises:

   reducing an exposure value of the camera apparatus when the tunnel portal area is overexposed, wherein that the tunnel portal area is overexposed comprises at least one of the following: an average pixel brightness value of the tunnel portal area is greater than or equal to a first preset brightness; and a ratio of the average pixel brightness value of the tunnel portal area to an average pixel brightness value of a background area is greater than or equal to a first preset ratio, wherein the background area is an image area in the tunnel image other than the tunnel portal area.

4. The method according to any one of claims 1 to 2,

wherein the tunnel environment data is a tunnel image captured by the camera apparatus (1026) comprising a tunnel portal area, and the tunnel portal area is an image area that is occupied by a tunnel portal of the tunnel in the tunnel image; and
the determining (S404) an exposure parameter of the camera apparatus in the vehicle (100, 202) based on the tunnel environment data comprises:

increasing an exposure of the camera apparatus when the tunnel portal area is underexposed, wherein that the tunnel portal area is underexposed comprises at least one of the following: an average pixel brightness value of the tunnel portal area is less than or equal to a second preset brightness; and a ratio of the average pixel brightness value of the tunnel portal area to an average pixel brightness value of a background area is less than or equal to a second preset ratio.

5. The method according to any one of claims 3 or 4, wherein the obtaining tunnel environment data comprises:
when a ratio of the tunnel portal area to the tunnel image is greater than or equal to a first preset threshold, obtaining the tunnel environment data, wherein the tunnel image is a tunnel image that is captured before the vehicle (100, 202) enters or exits the tunnel and that comprises the tunnel portal area, and the tunnel portal area is the image area that is occupied by the tunnel portal of the tunnel in the tunnel image.

6. A parameter adjustment apparatus (500), comprising:

a communications module (502), configured to obtain tunnel environment data, wherein the tunnel environment data is tunnel-related environment data that is collected before a vehicle (100, 202) enters or exits a tunnel, and the vehicle (100, 202) is installed with a camera apparatus used for image capture; and
a processing module (504), configured to determine an exposure parameter of the camera apparatus in the vehicle (100, 202) based on the tunnel environment data, and adjust the camera apparatus based on the exposure parameter when the vehicle (100, 202) enters or exits the tunnel;
**characterized in that** the tunnel environment data comprises a plurality of pieces of different types of tunnel environment data;
wherein the processing module (504) is specifically configured to obtain, based on the tunnel environment data, an exposure compensation parameter from a database (204), wherein the database (204) comprises a plurality of scenarios each including a combination of historical tunnel environment data of the different types each associated with a respective importance degree, a corresponding historical compensation parameter and a corresponding confidence level, wherein the confidence level is used to indicate a probability of selecting the corresponding compensation parameter as the exposure compensation parameter;
wherein the processing module (504) is specifically configured to obtain the exposure compensation parameter by first screening out scenarios for which a difference between a type of tunnel environment data and its corresponding historical tunnel environment data having the highest importance degree is larger than a threshold and reserving scenarios for which the difference is smaller than the threshold, then successively screening out scenarios for which a difference between a type of tunnel environment data and its corresponding historical tunnel environment data a next lower importance degree is larger than a threshold and reserving scenarios for which the difference is smaller than the threshold until finding a best-matched scenario, and selecting from the best-matched scenario the historical compensation parameter with the highest confidence level as the exposure compensation parameter;
wherein the processing module (504) is specifically configured to obtain the exposure parameter of the camera apparatus based on an initial exposure parameter and the exposure compensation parameter, wherein the initial exposure parameter is an average-exposure parameter of N frames of images that are captured before the vehicle (100, 202) enters or exits the tunnel, wherein N is a positive integer.

7. The apparatus according to claim 6,

wherein the tunnel environment data is a tunnel image captured by the camera apparatus (1026) comprising a tunnel portal area, and the tunnel portal area is an image area that is occupied by a tunnel portal of the tunnel in the tunnel image; and
the processing module (504) is specifically configured to reduce an exposure of the camera apparatus when the tunnel portal area is overexposed, wherein
that the tunnel portal area is overexposed comprises at least one of the following: an average pixel brightness value of the tunnel portal area is greater than or equal to a first preset brightness; and a ratio of the average pixel brightness value of the tunnel portal area to an average pixel brightness value of a background area is greater than or equal to a first preset ratio, wherein the background area is an image area in the tunnel image other than the tunnel portal area.

8. The apparatus according to claim 6, wherein the tunnel environment data is a tunnel image captured by the camera apparatus (1026) comprising a tunnel portal area, and the tunnel portal area is an image area that is occupied by a tunnel portal of the tunnel in the tunnel image; and

the processing module (504) is specifically configured to increase an exposure of the camera apparatus when the tunnel portal area is underexposed, wherein
that the tunnel portal area is underexposed comprises at least one of the following: an average pixel brightness value of the tunnel portal area is less than or equal to a second preset brightness; and a ratio of the average pixel brightness value of the tunnel portal area to an average pixel brightness value of a background area is less than or equal to a second preset ratio.

9. The apparatus according to any one of claims 7 to 8, wherein the communications module (502) is specifically configured to obtain the tunnel environment data when a ratio of the tunnel portal area to the tunnel image is greater than or equal to a first preset threshold, wherein the tunnel image is a tunnel image that is captured before the vehicle (100, 202) enters or exits the tunnel and that comprises the tunnel portal area, and the tunnel portal area is the image area that is occupied by the tunnel portal of the tunnel in the tunnel image.

10. The apparatus according to any one of claims 6 to 9, wherein the communications module (502) is further configured to send the tunnel environment data and the exposure parameter of the camera apparatus to the database.

11. A computing device (600), comprising a processor (601), a memory (603), a communications interface (602), and a bus (604), wherein the processor, the communications interface, and the memory communicate with each other through the bus; the communications interface is configured to receive and send data; the memory is configured to store an instruction; and the processor is configured to invoke the instruction in the memory to perform the method according to any one of claims 1 to 6.

**Patentansprüche**

1. Computerimplementiertes Verfahren zum Einstellen einer Kameravorrichtung (1026), das Folgendes umfasst:

Erhalten (S403) von Tunnelumgebungsdaten, wobei die Tunnelumgebungsdaten tunnelbezogene Umgebungsdaten sind, die gesammelt werden, bevor ein Fahrzeug (100, 202) in einen Tunnel einfährt oder ihn verlässt, und das Fahrzeug (100, 202) mit der für die Bilderfassung verwendeten Kameravorrichtung versehen ist;
Bestimmen (S404) eines Belichtungsparameters der Kameravorrichtung im Fahrzeug (100, 202) basierend auf den Tunnelumgebungsdaten; und
wenn das Fahrzeug (100, 202) in den Tunnel einfährt oder ihn verlässt, Einstellen (S406) der Kameravorrichtung auf der Grundlage des Belichtungsparameters;
**dadurch gekennzeichnet, dass**
die Tunnelumgebungsdaten eine Vielzahl von Teilen unterschiedlicher Arten von Tunnelumgebungsdaten umfassen;
wobei das Bestimmen (S404) eines Belichtungsparameters der Kameravorrichtung in dem Fahrzeug (100, 202) auf der Grundlage der Tunnelumgebungsdaten Folgendes umfasst:

Erhalten eines Belichtungskompensationsparameters aus einer Datenbank (204) auf der Grundlage der Tunnelumgebungsdaten,
wobei die Datenbank (204) eine Vielzahl von Szenarien umfasst, die jeweils eine Kombination historischer Tunnelumgebungsdaten der verschiedenen Arten enthalten, die jeweils mit einem entsprechenden Wichtigkeitsgrad, einem entsprechenden historischen Kompensationsparameter und einem entsprechenden Konfidenzniveau verbunden sind,

wobei das Konfidenzniveau verwendet wird, um eine Wahrscheinlichkeit der Auswahl des entsprechenden Kompensationsparameters als Belichtungskompensationsparameter anzugeben,

wobei der Belichtungskompensationsparameter erhalten wird, indem zunächst Szenarien ausgesiebt werden, für die eine Differenz zwischen einer Art von Tunnelumgebungsdaten und ihren entsprechenden historischen Tunnelumgebungsdaten mit dem höchsten Wichtigkeitsgrad größer als ein Schwellenwert ist, und Szenarien reserviert werden, für die die Differenz kleiner als der Schwellenwert ist, dann sukzessive Szenarien aussortiert werden, für die eine Differenz zwischen einer Art von Tunnelumgebungsdaten und ihren entsprechenden historischen Tunnelumgebungsdaten mit einem nächst niedrigeren Wichtigkeitsgrad größer als ein Schwellenwert ist, und Szenarien reserviert werden, für die die Differenz kleiner als der Schwellenwert ist, bis ein bestangepasstes Szenario gefunden wird, und aus dem bestangepassten Szenario der historische Kompensationsparameter mit dem höchsten Konfidenzniveau als der Belichtungskompensationsparameter ausgewählt wird;

Erhalten des Belichtungsparameters der Kameravorrichtung auf der Grundlage eines anfänglichen Belichtungsparameters und des Belichtungskompensationsparameters,

wobei der anfängliche Belichtungsparameter ein Durchschnittsbelichtungsparameter von N Bildern ist, die aufgenommen werden, bevor das Fahrzeug (100, 202) in den Tunnel einfährt oder ihn verlässt, wobei N eine positive ganze Zahl ist.

2. Verfahren gemäß Anspruch 1,

wobei die verschiedenen Arten von Tunnelumgebungsdaten die Leuchtdichte im Tunnel, die Umgebungshelligkeit außerhalb des Tunnels, Wetterdaten und Zeitdaten umfassen.

3. Verfahren nach einem der Ansprüche 1 bis 2,

wobei die Tunnelumgebungsdaten ein von der Kameravorrichtung (1026) aufgenommenes Tunnelbild sind, das einen Tunnelportalbereich umfasst, und der Tunnelportalbereich ein Bildbereich ist, der von einem Tunnelportal des Tunnels in dem Tunnelbild eingenommen wird; und

das Bestimmen (S404) eines Belichtungsparameters der Kameravorrichtung in dem Fahrzeug (100, 202) auf der Grundlage der Tunnelumgebungsdaten Folgendes umfasst:

Verringern eines Belichtungswerts der Kameravorrichtung, wenn der Tunnelportalbereich überbelichtet ist, wobei die Tatsache, dass der Tunnelportalbereich überbelichtet ist, mindestens eines der folgenden Merkmale umfasst: ein durchschnittlicher Pixel-Helligkeitswert des Tunnelportalbereichs ist größer als oder gleich einer ersten voreingestellten Helligkeit; und ein Verhältnis des durchschnittlichen Pixel-Helligkeitswertes des Tunnelportalbereichs zu einem durchschnittlichen Pixel-Helligkeitswert eines Hintergrundbereichs ist größer als oder gleich einem ersten voreingestellten Verhältnis,

wobei der Hintergrundbereich ein anderer Bildbereich im Tunnelbild ist als der Tunnelportalbereich.

4. Verfahren nach einem der Ansprüche 1 bis 2,

wobei die Tunnelumgebungsdaten ein von der Kameravorrichtung (1026) aufgenommenes Tunnelbild sind, das einen Tunnelportalbereich umfasst, und der Tunnelportalbereich ein Bildbereich ist, der von einem Tunnelportal des Tunnels in dem Tunnelbild eingenommen wird; und

das Bestimmen (S404) eines Belichtungsparameters der Kameravorrichtung in dem Fahrzeug (100, 202) auf der Grundlage der Tunnelumgebungsdaten Folgendes umfasst:

Erhöhen einer Belichtung der Kameravorrichtung, wenn der Tunnelportalbereich unterbelichtet ist, wobei die Tatsache, dass der Tunnelportalbereich unterbelichtet ist, mindestens eines der folgenden Merkmale umfasst: ein durchschnittlicher Pixel-Helligkeitswert des Tunnelportalbereichs ist kleiner als oder gleich einer zweiten voreingestellten Helligkeit; und ein Verhältnis des durchschnittlichen Pixel-Helligkeitswertes des Tunnelportalbereichs zu einem durchschnittlichen Pixel-Helligkeitswert eines Hintergrundbereichs ist kleiner als oder gleich einem zweiten voreingestellten Verhältnis.

5. Verfahren nach einem der Ansprüche 3 oder 4,

wobei das Erhalten von Tunnelumgebungsdaten Folgendes umfasst:

wenn ein Verhältnis zwischen dem Tunnelportalbereich und dem Tunnelbild größer oder gleich einem ersten voreingestellten Schwellenwert ist, werden die Tunnelumgebungsdaten erhalten,
wobei das Tunnelbild ein Tunnelbild ist, das aufgenommen wird, bevor das Fahrzeug (100, 202) in den Tunnel einfährt oder ihn verlässt, und das den Tunnelportalbereich umfasst, und der Tunnelportalbereich der Bildbereich ist, der von dem Tunnelportal des Tunnels in dem Tunnelbild eingenommen wird.

6. Parametereinstellungsvorrichtung (500), die Folgendes umfasst:

ein Kommunikationsmodul (502), das so konfiguriert ist, dass es Tunnelumgebungsdaten erhält,
wobei die Tunnelumgebungsdaten tunnelbezogene Umgebungsdaten sind, die gesammelt werden, bevor ein Fahrzeug (100, 202) in einen Tunnel einfährt oder ihn verlässt, und das Fahrzeug (100, 202) mit einer Kameravorrichtung ausgestattet ist,
die zur Bilderfassung verwendet wird; und
ein Verarbeitungsmodul (504), das so konfiguriert ist, dass es einen Belichtungsparameter der Kameravorrichtung in dem Fahrzeug (100, 202) auf der Grundlage der Tunnelumgebungsdaten bestimmt und die Kameravorrichtung auf der Grundlage des Belichtungsparameters einstellt, wenn das Fahrzeug (100, 202) in den Tunnel einfährt oder diesen verlässt;
**dadurch gekennzeichnet, dass**
die Tunnelumgebungsdaten eine Vielzahl von Teilen unterschiedlicher Arten von Tunnelumgebungsdaten umfassen;
wobei das Verarbeitungsmodul (504) speziell konfiguriert ist, um auf der Grundlage der Tunnelumgebungsdaten einen Belichtungskompensationsparameter aus einer Datenbank (204) zu erhalten,
wobei die Datenbank (204) eine Vielzahl von Szenarien umfasst, die jeweils eine Kombination historischer Tunnelumgebungsdaten der verschiedenen Arten enthalten, die jeweils mit einem entsprechenden Wichtigkeitsgrad, einem entsprechenden historischen Kompensationsparameter und einem entsprechenden Konfidenzniveau verbunden sind,
wobei das Konfidenzniveau verwendet wird, um eine Wahrscheinlichkeit der Auswahl des entsprechenden Kompensationsparameters als Belichtungskompensationsparameter anzugeben;
wobei das Verarbeitungsmodul (504) speziell konfiguriert ist, um den Belichtungskompensationsparameter zu erhalten, indem zunächst Szenarien ausgesiebt werden, für die eine Differenz zwischen einer Art von Tunnelumgebungsdaten und ihren entsprechenden historischen Tunnelumgebungsdaten mit dem höchsten Wichtigkeitsgrad größer als ein Schwellenwert ist, und Szenarien reserviert werden, für die die Differenz kleiner als der Schwellenwert ist, dann sukzessive Szenarien aussortiert werden, für die eine Differenz zwischen einer Art von Tunnelumgebungsdaten und ihren entsprechenden historischen Tunnelumgebungsdaten mit einem nächst niedrigeren Wichtigkeitsgrad größer als ein Schwellenwert ist, und Szenarien reserviert werden, für die die Differenz kleiner als der Schwellenwert ist, bis ein bestangepasstes Szenario gefunden wird, und aus dem bestangepassten Szenario der historische Kompensationsparameter mit dem höchsten Konfidenzniveau als Belichtungskompensationsparameter ausgewählt wird;
wobei das Verarbeitungsmodul (504) speziell konfiguriert ist, um den Belichtungsparameter der Kameravorrichtung basierend auf einem anfänglichen Belichtungsparameter und dem Belichtungskompensationsparameter zu erhalten,
wobei der anfängliche Belichtungsparameter ein Durchschnittsbelichtungsparameter von N Bildern ist, die aufgenommen werden, bevor das Fahrzeug (100, 202) in den Tunnel einfährt oder ihn verlässt, wobei N eine positive ganze Zahl ist.

7. Vorrichtung nach Anspruch 6,

wobei die Tunnelumgebungsdaten ein von der Kameravorrichtung (1026) aufgenommenes Tunnelbild sind, das einen Tunnelportalbereich umfasst, und der Tunnelportalbereich ein Bildbereich ist, der von einem Tunnelportal des Tunnels in dem Tunnelbild eingenommen wird; und
das Verarbeitungsmodul (504) speziell so konfiguriert ist, dass es eine Belichtung der Kameravorrichtung reduziert, wenn der Tunnelportalbereich überbelichtet ist,
wobei die Tatsache, dass der Tunnelportalbereich überbelichtet ist, mindestens eines der folgenden Merkmale umfasst: ein durchschnittlicher Pixel-Helligkeitswert des Tunnelportalbereichs ist größer als oder gleich einer ersten voreingestellten Helligkeit; und ein Verhältnis des durchschnittlichen Pixel-Helligkeitswertes des Tunnelportalbereichs zu einem durchschnittlichen Pixel-Helligkeitswert eines Hintergrundbereichs ist größer als oder gleich einem ersten voreingestellten Verhältnis,
wobei der Hintergrundbereich ein anderer Bildbereich im Tunnelbild ist als der Tunnelportalbereich.

**8.** Vorrichtung nach Anspruch 6,

wobei die Tunnelumgebungsdaten ein von der Kameravorrichtung (1026) aufgenommenes Tunnelbild sind, das einen Tunnelportalbereich umfasst, und der Tunnelportalbereich ein Bildbereich ist, der von einem Tunnelportal des Tunnels in dem Tunnelbild eingenommen wird; und

das Verarbeitungsmodul (504) speziell so konfiguriert ist, dass es eine Belichtung der Kameravorrichtung erhöht, wenn der Tunnelportalbereich unterbelichtet ist,

wobei die Tatsache, dass der Tunnelportalbereich unterbelichtet ist, mindestens eines der folgenden Merkmale umfasst: ein durchschnittlicher Pixel-Helligkeitswert des Tunnelportalbereichs ist kleiner als oder gleich einer zweiten voreingestellten Helligkeit; und ein Verhältnis des durchschnittlichen Pixel-Helligkeitswertes des Tunnelportalbereichs zu einem durchschnittlichen Pixel-Helligkeitswert eines Hintergrundbereichs ist kleiner als oder gleich einem zweiten voreingestellten Verhältnis.

**9.** Vorrichtung nach einem der Ansprüche 7 bis 8,

wobei das Kommunikationsmodul (502) speziell konfiguriert ist, um die Tunnelumgebungsdaten zu erhalten, wenn ein Verhältnis des Tunnelportalbereichs zum Tunnelbild größer oder gleich einem ersten voreingestellten Schwellenwert ist,

wobei das Tunnelbild ein Tunnelbild ist, das aufgenommen wird, bevor das Fahrzeug (100, 202) in den Tunnel einfährt oder ihn verlässt, und das den Tunnelportalbereich umfasst, und der Tunnelportalbereich der Bildbereich ist, der von dem Tunnelportal des Tunnels in dem Tunnelbild eingenommen wird.

**10.** Vorrichtung nach einem der Ansprüche 6 bis 9,
wobei das Kommunikationsmodul (502) ferner so konfiguriert ist, dass es die Tunnelumgebungsdaten und die Belichtungsparameter der Kameravorrichtung an die Datenbank sendet.

**11.** Rechenvorrichtung (600), die einen Prozessor (601), einen Speicher (603), eine Kommunikationsschnittstelle (602) und einen Bus (604) umfasst,
wobei der Prozessor, die Kommunikationsschnittstelle und der Speicher über den Bus miteinander kommunizieren; die Kommunikationsschnittstelle so konfiguriert ist, dass sie Daten empfängt und sendet; der Speicher so konfiguriert ist, dass er einen Befehl speichert; und der Prozessor so konfiguriert ist, dass er den Befehl in dem Speicher aufruft, um das Verfahren nach einem der Ansprüche 1 bis 6 durchzuführen.


**Revendications**

**1.** Procédé mis en oeuvre par ordinateur pour régler un appareil de prise de vues (1026), comprenant :

l'obtention (S403) de données d'environnement de tunnel, les données d'environnement de tunnel étant des données d'environnement liées au tunnel qui sont collectées avant qu'un véhicule (100, 202) n'entre ou ne sorte d'un tunnel, et le véhicule (100, 202) ayant, installé sur lui, l'appareil de prise de vues utilisé pour la capture d'images ;
la détermination (S404) d'un paramètre d'exposition de l'appareil de prise de vues dans le véhicule (100, 202) sur la base des données d'environnement de tunnel ; et
lorsque le véhicule (100, 202) entre ou sort du tunnel, le réglage (S406) de l'appareil de prise de vues sur la base du paramètre d'exposition ;
**caractérisé en ce que**
les données d'environnement de tunnel comprennent une pluralité d'éléments de différents types de données d'environnement de tunnel ;
la détermination (S404) d'un paramètre d'exposition de l'appareil de prise de vues dans le véhicule (100, 202) sur la base des données d'environnement de tunnel comprenant :

l'obtention d'un paramètre de compensation d'exposition à partir d'une base de données (204) sur la base des données d'environnement de tunnel, la base de données (204) comprenant une pluralité de scénarios incluant chacun une combinaison de données d'environnement de tunnel historiques des différents types associés chacun à un degré d'importance respectif, un paramètre de compensation historique correspondant et un niveau de confiance correspondant, le niveau de confiance étant utilisé pour indiquer une probabilité de sélection du paramètre de compensation correspondant en tant que paramètre de compensation d'exposition,

le paramètre de compensation d'exposition étant obtenu en éliminant d'abord des scénarios pour lesquels une différence entre un type de données d'environnement de tunnel et ses données d'environnement de tunnel historiques correspondantes ayant le degré d'importance le plus élevé est supérieure à un seuil et en réservant des scénarios pour lesquels la différence est inférieure au seuil, puis en filtrant successivement les scénarios pour lesquels une différence entre un type de données d'environnement de tunnel et ses données d'environnement du tunnel historiques correspondantes ayant un degré d'importance immédiatement inférieur est supérieure à un seuil et en réservant des scénarios pour lesquels la différence est inférieure au seuil jusqu'à trouver un scénario le mieux adapté, et en sélectionnant à partir du scénario le mieux adapté le paramètre de compensation historique avec le niveau de confiance le plus élevé en tant que paramètre de compensation d'exposition ;

l'obtention du paramètre d'exposition de l'appareil de prise de vues sur la base d'un paramètre d'exposition initial et du paramètre de compensation d'exposition, le paramètre d'exposition initial étant un paramètre d'exposition moyenne de N trames d'images qui sont capturées avant que le véhicule (100, 202) n'entre ou ne sorte du tunnel, N étant un entier positif.

2. . Procédé selon la revendication 1, dans lequel les différents types de données d'environnement de tunnel comprennent la luminance de la lumière à l'intérieur du tunnel, la luminosité environnementale à l'extérieur du tunnel, des données météorologiques et des données temporelles.

3. . Procédé selon l'une quelconque des revendications 1 à 2, dans lequel les données d'environnement de tunnel sont une image de tunnel capturée par l'appareil de prise de vues (1026) comprenant une zone d'entrée de tunnel, et la zone d'entrée de tunnel est une zone d'image qui est occupée par une entrée de tunnel du tunnel dans l'image du tunnel ; et

la détermination (S404) d'un paramètre d'exposition de l'appareil de prise de vues dans le véhicule (100, 202) sur la base des données d'environnement de tunnel comprend :

la réduction d'une valeur d'exposition de l'appareil de prise de vues lorsque la zone d'entrée du tunnel est surexposée,

le fait que la zone d'entrée de tunnel soit surexposée comprend au moins un parmi ce qui suit : une valeur moyenne de luminosité de pixel de la zone d'entrée de tunnel est supérieure ou égale à une première luminosité prédéfinie ; et un rapport de la valeur moyenne de luminosité de pixel de la zone d'entrée de tunnel à une valeur moyenne de luminosité de pixel d'une zone d'arrière-plan est supérieur ou égal à un premier rapport prédéfini, la zone d'arrière-plan étant une zone d'image dans l'image du tunnel autre que la zone d'entrée du tunnel.

4. . Procédé selon l'une quelconque des revendications 1 à 2,

dans lequel les données d'environnement de tunnel sont une image de tunnel capturée par l'appareil de prise de vues (1026) comprenant une zone d'entrée de tunnel, et la zone d'entrée de tunnel est une zone d'image qui est occupée par une entrée de tunnel du tunnel dans l'image du tunnel ; et

la détermination (S404) d'un paramètre d'exposition de l'appareil de prise de vues dans le véhicule (100, 202) sur la base des données d'environnement de tunnel comprend : l'augmentation d'une exposition de l'appareil de prise de vues lorsque la zone d'entrée du tunnel est sous-exposée,

le fait que la zone d'entrée de tunnel soit sous-exposée comprend au moins un parmi ce qui suit : une valeur moyenne de luminosité de pixel de la zone d'entrée de tunnel est inférieure ou égale à une deuxième luminosité prédéfinie ; et un rapport de la valeur moyenne de luminosité de pixel de la zone d'entrée de tunnel à une valeur moyenne de luminosité de pixel d'une zone d'arrière-plan est inférieur ou égal à un deuxième rapport prédéfini.

5. . Procédé selon l'une quelconque des revendications 3 ou 4, dans lequel l'obtention de données d'environnement de tunnel comprend :

lorsqu'un rapport de la zone d'entrée du tunnel à l'image du tunnel est supérieur ou égal à un premier seuil prédéfini, l'obtention des données d'environnement de tunnel, l'image du tunnel étant une image du tunnel qui est capturée avant que le véhicule (100, 202) n'entre ou ne sorte du tunnel et qui comprend la zone d'entrée du tunnel, et la zone d'entrée du tunnel étant la zone d'image qui est occupée par l'entrée de tunnel du tunnel dans l'image du tunnel.

6. . Appareil de réglage de paramètre (500), comprenant :

un module de communication (502), configuré pour obtenir des données d'environnement de tunnel, les données d'environnement de tunnel étant des données d'environnement liées au tunnel qui sont collectées avant qu'un véhicule (100, 202) n'entre ou ne sorte d'un tunnel, et le véhicule (100, 202) ayant, installé sur lui, un appareil de prise de vues utilisé pour la capture d'images ; et

un module de traitement (504), configuré pour déterminer un paramètre d'exposition de l'appareil de prise de vues dans le véhicule (100, 202) sur la base des données d'environnement de tunnel, et pour régler l'appareil de prise de vues sur la base du paramètre d'exposition lorsque le véhicule (100, 202) entre ou sort du tunnel ; **caractérisé en ce que**

les données d'environnement de tunnel comprennent une pluralité d'éléments de différents types de données d'environnement de tunnel ;

le module de traitement (504) étant spécifiquement configuré pour obtenir, sur la base des données d'environnement de tunnel, un paramètre de compensation d'exposition en provenance d'une base de données (204), la base de données (204) comprenant une pluralité de scénarios incluant chacun une combinaison de données d'environnement de tunnel historiques des différents types associés chacun à un degré d'importance respectif, un paramètre de compensation historique correspondant et un niveau de confiance correspondant, le niveau de confiance étant utilisé pour indiquer une probabilité de sélection du paramètre de compensation correspondant en tant que le paramètre de compensation d'exposition ;

le module de traitement (504) étant spécifiquement configuré pour obtenir le paramètre de compensation d'exposition en filtrant d'abord des scénarios pour lesquels une différence entre un type de données d'environnement de tunnel et ses données d'environnement de tunnel historiques correspondantes ayant le degré d'importance le plus élevé est supérieure à un seuil et en réservant des scénarios pour lesquels la différence est inférieure au seuil, puis en filtrant successivement des scénarios pour lesquels une différence entre un type de données d'environnement de tunnel et ses données d'environnement de tunnel historiques correspondantes ayant un degré d'importance immédiatement inférieur est supérieure à un seuil et en réservant des scénarios pour lesquels la différence est inférieure au seuil jusqu'à trouver un scénario le mieux adapté, et sélectionner dans le scénario le mieux adapté le paramètre de compensation historique avec le niveau de confiance le plus élevé en tant que le paramètre de compensation d'exposition ;

le module de traitement (504) étant spécifiquement configuré pour obtenir le paramètre d'exposition de l'appareil de prise de vues sur la base d'un paramètre d'exposition initial et du paramètre de compensation d'exposition, le paramètre d'exposition initial étant un paramètre d'exposition moyenne de N trames d'images qui sont capturées avant que le véhicule (100, 202) n'entre ou ne sorte du tunnel, N étant un nombre entier positif.

7. . Appareil selon la revendication 6, dans lequel les données d'environnement de tunnel sont une image de tunnel capturée par l'appareil de prise de vues (1026) comprenant une zone d'entrée de tunnel, et la zone d'entrée de tunnel est une zone d'image qui est occupée par une entrée de tunnel du tunnel dans l'image du tunnel ; et

le module de traitement (504) est spécifiquement configuré pour réduire une exposition de l'appareil de prise de vues lorsque la zone d'entrée de tunnel est surexposée,

le fait que la zone d'entrée de tunnel soit surexposée comprend au moins un parmi ce qui suit : une valeur moyenne de luminosité de pixel de la zone d'entrée de tunnel est supérieure ou égale à une première luminosité prédéfinie ; et un rapport de la valeur moyenne de luminosité de pixel de la zone d'entrée de tunnel à une valeur moyenne de luminosité de pixel d'une zone d'arrière-plan est supérieur ou égal à un premier rapport prédéfini, la zone d'arrière-plan étant une zone d'image dans l'image du tunnel autre que la zone d'entrée du tunnel.

8. . Appareil selon la revendication 6, dans lequel les données d'environnement de tunnel sont une image de tunnel capturée par l'appareil de prise de vues (1026) comprenant une zone d'entrée de tunnel, et la zone d'entrée de tunnel est une zone d'image qui est occupée par une entrée de tunnel du tunnel dans l'image du tunnel ; et

le module de traitement (504) est spécifiquement configuré pour augmenter une exposition de l'appareil de prise de vues lorsque la zone d'entrée du tunnel est sous-exposée,

le fait que la zone d'entrée de tunnel soit sous-exposée comprend au moins un parmi ce qui suit : une valeur moyenne de luminosité de pixel de la zone d'entrée de tunnel est inférieure ou égale à une deuxième luminosité prédéfinie ; et un rapport de la valeur moyenne de luminosité de pixel de la zone d'entrée de tunnel à une valeur moyenne de luminosité de pixel d'une zone d'arrière-plan est inférieur ou égal à un deuxième rapport prédéfini.

9. . Appareil selon l'une quelconque des revendications 7 à 8, dans lequel le module de communication (502) est spécifiquement configuré pour obtenir les données d'environnement de tunnel lorsqu'un rapport de la zone d'entrée du tunnel à l'image du tunnel est supérieur ou égal à un premier seuil prédéfini, l'image du tunnel étant une image du tunnel qui est capturée avant que le véhicule (100, 202) n'entre ou ne sorte du tunnel et qui comprend la zone de l'entrée du tunnel, et la zone de l'entrée du tunnel étant la zone d'image qui est occupée par l'entrée de tunnel du tunnel dans l'image du tunnel.

10. . Appareil selon l'une quelconque des revendications 6 à 9, dans lequel
le module de communication (502) est en outre configuré pour envoyer les données d'environnement de tunnel et le paramètre d'exposition de l'appareil de prise de vues à la base de données.

11. . Dispositif informatique (600), comprenant un processeur (601), une mémoire (603), une interface de communication (602) et un bus (604), dans lequel le processeur, l'interface de communication et la mémoire communiquent entre eux par l'intermédiaire du bus ; l'interface de communication est configurée pour recevoir et envoyer des données ; la mémoire est configurée pour stocker une instruction ; et le processeur est configuré pour invoquer l'instruction dans la mémoire afin de mettre en oeuvre le procédé selon l'une quelconque des revendications 1 à 6.

Vehicle 100

| Sensor system 102 | Control system 104 | Peripheral device 106 |
|---|---|---|
| Global positioning system 1021 | Steering unit 1041 | Communications system 1061 |
| Weather system 1022 | Braking unit 1042 | Touchscreen 1062 |
| Inertial measurement unit 1023 | Lighting system 1043 | User interface 1063 |
| Radar unit 1024 | Self-driving system 1044 | Microphone 1064 |
| Laser rangefinder 1025 | Map navigation system 1045 | Loudspeaker 1065 |
| Camera apparatus 1026 | Network time system 1046 | |
| Photosensitive unit 1027 | Obstacle avoidance system 1047 | Power supply 108 |
| Steering sensor 1028 | | |

Computer system 110

| Processor 1101 | Memory 1102 |
|---|---|

FIG. 1

FIG. 2

FIG. 3A

FIG. 3B

A computing device obtains tunnel environment data — S402

The computing device determines an exposure parameter of a camera apparatus in a vehicle based on the tunnel environment data — S404

When the vehicle enters or exits a tunnel, the computing device adjusts the camera apparatus based on the determined exposure parameter — S406

FIG. 4

Parameter adjustment apparatus 500

502
Communications module

504
Processing module

506
Storage module

FIG. 5

Computing device 600

601
Processor

604

603
Program code

Memory

602
Communications interface

FIG. 6

**EP 3 783 882 B1**

**REFERENCES CITED IN THE DESCRIPTION**

**Patent documents cited in the description**

- EP 3291134 A1
- US 2017153326 A1
- US 2018262678 A1